(19) Europäisches Patentamt
European Patent Office
Office européen des brevets

(11) **EP 3 947 936 B1**

(12) **FASCICULE DE BREVET EUROPEEN**

(45) Date de publication et mention
de la délivrance du brevet:
**18.01.2023 Bulletin 2023/03**

(21) Numéro de dépôt: **20712351.4**

(22) Date de dépôt: **20.03.2020**

(51) Classification Internationale des Brevets (IPC):
**F02C 3/10** *(2006.01)* **F02C 9/26** *(2006.01)*
**B64D 27/02** *(2006.01)*

(52) Classification Coopérative des Brevets (CPC):
**F02C 9/26; F02C 3/10;** B64D 2027/026;
F05D 2220/76; Y02T 50/60

(86) Numéro de dépôt international:
**PCT/EP2020/057884**

(87) Numéro de publication internationale:
**WO 2020/200853 (08.10.2020 Gazette 2020/41)**

(54) **PROCEDE ET SYSTEME DE REGULATION D'UNE TURBOMACHINE DE GENERATION ELECTRIQUE NON PROPULSIVE**

VERFAHREN UND SYSTEM ZUR STEUERUNG EINES NICHTANTRIEBSENERGIEERZEUGUNGSTURBINENMOTORS

METHOD AND SYSTEM FOR CONTROLLING A NON-PROPULSIVE POWER GENERATION TURBINE ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.04.2019 FR 1903434**

(43) Date de publication de la demande:
**09.02.2022 Bulletin 2022/06**

(73) Titulaire: **Safran Helicopter Engines**
**64510 Bordes (FR)**

(72) Inventeurs:
• **BEDDOK, Stéphane, Meyer**
**77550 Moissy-Cramayel (FR)**
• **POUMAREDE, Vincent**
**77550 Moissy-Cramayel (FR)**

(74) Mandataire: **Argyma**
**14 Boulevard de Strasbourg**
**31000 Toulouse (FR)**

(56) Documents cités:
**EP-A1- 2 829 472     US-A1- 2018 291 807**
**US-B1- 10 233 768**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### DOMAINE TECHNIQUE DE L'INVENTION

La présente invention concerne le domaine de la propulsion d'un aéronef comprenant plusieurs rotors propulsifs, en particulier, une pluralité de rotors propulsifs alimentés électriquement par une turbomachine de génération électrique non propulsive.

De manière connue, il a été proposé d'équiper un aéronef avec un système de propulsion hybride comportant une turbomachine de génération électrique non propulsive, une batterie et une pluralité de rotors alimentés électriquement. Un tel système de propulsion hybride permet de transporter des biens et marchandises de manière optimale en limitant les nuisances sonores et la consommation de carburant.

L'utilisation d'un système de propulsion hybride pose des inconvénients sur le plan de la régulation de la turbomachine étant donné que cette dernière n'est plus propulsive mais dédiée à la génération d'énergie électrique.

De manière connue, une turbomachine propulsive dite « à double corps » ou « à turbine libre » comporte un arbre haute pression, ayant un régime de rotation haute pression N1, qui entraine notamment le compresseur, et un arbre basse pression, ayant un régime de rotation basse pression N2, qui forme l'arbre de sortie. De manière connue, l'arbre basse pression est relié à une turbine libre, qui entraîne mécaniquement au travers d'un étage de réduction un rotor propulsif comportant une pluralité de pales, dont le pas collectif peut être modifié. De manière connue, le pas collectif correspond à l'angle d'incidence commun à toutes les pales dudit rotor propulsif.

Dans un aéronef selon l'art antérieur comportant une turbomachine propulsive, il est connu un système de régulation configuré pour limiter les variations de régime basse pression N2 de manière à assurer la pilotabilité de l'aéronef, tout en contrôlant le débit de carburant ainsi que le régime haute pression N1 afin de permettre à la turbomachine de fonctionner à un rendement optimal.

Grâce à une manette des gaz appelée « manette de pas collectif », le pilote de l'aéronef peut modifier l'incidence des pales du rotor et modifier le couple mécanique exercé par ledit rotor sur l'arbre basse pression. La modification du pas collectif entraine donc une variation des besoins en puissance de la turbomachine propulsive.

Le système de régulation doit donc asservir le régime de rotation basse pression N2 indépendamment du besoin en puissance imposé par le pilote au moyen du pas collectif. Pour ce faire, le système de régulation de la turbomachine propulsive peut agir sur deux paramètres de fonctionnement : d'une part le débit de carburant injecté dans la chambre de combustion, d'autre part sur le régime de rotation haute pression N1 du compresseur, lequel conditionne le débit d'air admis dans la chambre de combustion et peut être considéré comme une image de la puissance fournie par la turbomachine sur l'arbre basse pression.

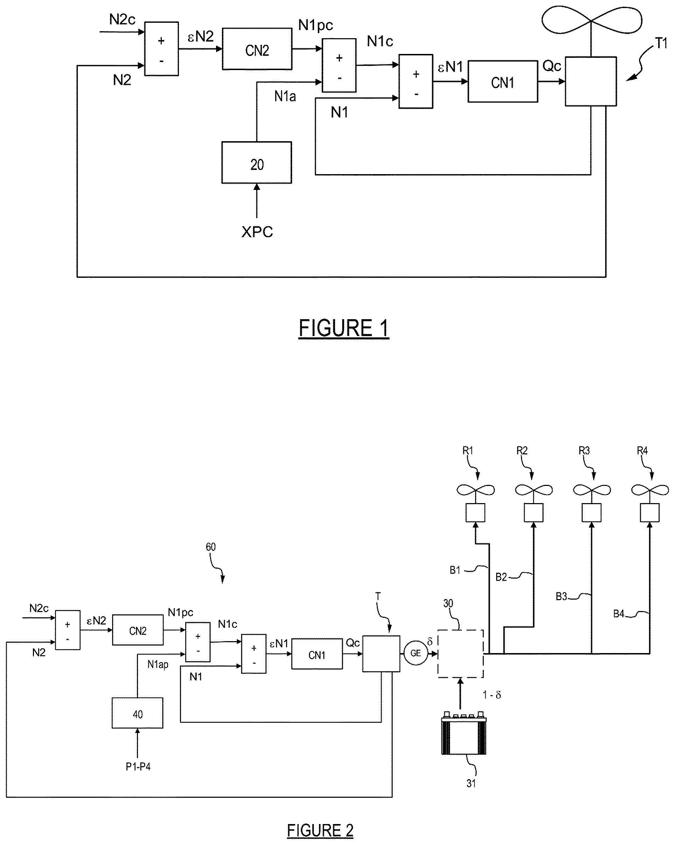

En pratique, comme illustré à la figure 1 représentant de manière schématique un système de régulation d'une turbomachine propulsive T1, le système de régulation de la turbomachine T1 repose sur deux boucles de régulation imbriquées : une boucle de régulation du régime basse pression N2 et une boucle de régulation du régime haute pression N1.

Le système de régulation reçoit en entrée une consigne de régime N2c qui est comparée au régime basse pression N2 de la turbomachine T1 afin de déterminer un écart de régime basse pression $\varepsilon$N2. Un paramètre haute pression préliminaire N1pc est déterminé par un correcteur basse pression CN2, du type proportionnel intégral, à partir de l'écart de régime basse pression $\varepsilon$N2. Un régime de consigne haute pression N1c est déterminé en additionnant le paramètre haute pression préliminaire N1pc à un paramètre d'anticipation N1a. Puis, le régime de consigne haute pression N1c est comparé au régime haute pression N1 de la turbomachine afin de déterminer un écart de régime haute pression $\varepsilon$N1. Une quantité de carburant Qc est déterminée par un correcteur haute pression CN1, du type proportionnel intégral, à partir de l'écart de régime haute pression $\varepsilon$N1. Ainsi, la turbomachine T1 reçoit une quantité de carburant optimale Qc pour limiter la variation de régime basse pression N2.

L'utilisation d'un paramètre d'anticipation N1a est importante dans la régulation car cela permet de prendre en compte, par anticipation, une modification du pas collectif XPC qui entraine une variation des besoins en puissance de la turbomachine T1. En pratique, le paramètre d'anticipation N1a est déterminé par un module de calcul 20 à partir d'une mesure du pas collectif XPC des pales du rotor de l'aéronef. En effet, le pas collectif XPC est un indicateur avancé des besoins en puissance de la turbomachine T1 et permet de réaliser une régulation optimale et précise au cours du temps. Pour permettre une telle régulation, la turbomachine T1 est équipée d'un dispositif de mesure de pas collectif XPC afin de pouvoir déterminer le paramètre d'anticipation N1a. Le module de calcul 20 se présente généralement sous la forme d'un modèle mathématique défini en fonction des caractéristiques physiques du rotor, des conditions de pression et de température de l'air (densité), et recalé de manière empirique par retour d'expérience, notamment, à partir d'essais en vol.

Dans le cas d'un aéronef comportant une turbomachine de génération électrique non propulsive, la turbomachine n'est pas reliée mécaniquement au rotor de l'aéronef mais électriquement à une pluralité de rotors propulsifs. Il n'est ainsi plus possible de déterminer un paramètre d'anticipation comme dans l'art antérieur.

Une solution immédiate serait de mesurer le pas collectif de chaque rotor électrique, ce qui est complexe et onéreux étant donné que chaque rotor devrait être équipé d'un dispositif de mesure de pas collectif XPC.

En outre, une mesure du pas collectif de chaque rotor électrique n'est pas pertinente étant donné que les contraintes pour une architecture multi-rotors sont différentes de celles d'une architecture mono-rotor. En particulier, dans une architecture multi-rotors, il est possible de modifier le pas collectif de chaque rotor mais également sa vitesse de rotation de manière indépendante, ce qui n'est pas possible dans une architecture mono-rotor.

Un procédé de régulation d'une turbomachine de production d'énergie électrique pour alimenter une pluralité de rotors propulsifs, selon l'art antérieur, est connu dans le document US 10233768 B1.

La présente invention vise à proposer un nouveau système de régulation adapté à une architecture multi-rotors qui puisse tirer avantage des avantages d'un système de régulation d'une architecture mono-rotor.

## PRESENTATION DE L'INVENTION

Un procédé de régulation d'une turbomachine de génération électrique non propulsive configurée pour alimenter électriquement une pluralité de rotors propulsifs d'un aéronef, chaque rotor propulsif étant relié à un module de répartition d'énergie par au moins un bus d'alimentation, la turbomachine alimentant chaque bus d'alimentation via le module de répartition d'énergie selon un taux d'alimentation, la turbomachine comportant un arbre haute pression, ayant un régime haute pression N1, un arbre basse pression, ayant un régime basse pression N2, le procédé de régulation comportant :

- une étape de détermination du besoin en puissance de chaque rotor propulsif,
- une étape de détermination du besoin en puissance de chaque bus d'alimentation en fonction du besoin en puissance de chaque rotor propulsif,
- une étape de détermination du besoin en puissance élémentaire de chaque bus d'alimentation en fonction du taux d'alimentation et du besoin en puissance de chaque bus d'alimentation
- une étape de détermination du besoin en puissance globale à partir de l'ensemble des besoins en puissance élémentaire des bus d'alimentation,
- une étape de détermination d'un paramètre d'anticipation à partir du besoin en puissance globale,
- une étape de détermination d'une consigne de régime haute pression à partir d'une consigne de régime basse pression et d'une mesure du régime basse pression de la turbomachine et dudit paramètre d'anticipation et
- une étape de détermination d'une consigne de débit de carburant de la turbomachine à partir de la consigne de régime haute pression et d'une mesure du régime haute pression.

De manière avantageuse, grâce à l'invention, on tire avantage d'un procédé de régulation connu pour une turbomachine propulsive pour réguler une turbomachine non propulsive de génération d'énergie. Un paramètre d'anticipation, basé sur l'impact du besoin en puissance électrique globale des rotors propulsifs, permet une régulation rapide, fiable et pertinente. La prise en compte du taux d'alimentation est également pertinente étant donné que toute l'énergie électrique n'est pas fournie par la turbomachine. Les besoins en énergie électrique sont ainsi déterminés de manière anticipée et fiable.

De manière avantageuse, la turbomachine entraine au moins une génératrice électrique, de préférence une pluralité de génératrices électriques, pour alimenter le module de répartition d'énergie. De préférence, l'arbre basse pression entraine au moins une génératrice électrique, de préférence, une pluralité de génératrices électriques. Bien que n'ayant pas de lien mécanique avec les rotors propulsifs de l'aéronef, l'arbre basse pression de la turbomachine non propulsive de génération d'énergie entraîne, soit directement, soit par l'intermédiaire d'un étage de réduction mécanique, une pluralité de génératrices électriques, lesquelles se caractérisent par une vitesse nominale d'entrainement permettant d'assurer un fonctionnement optimal desdites génératrices électriques. Cette vitesse d'entrainement optimale dépend notamment de la technologie et de la topologie des organes de rotor des génératrices électriques. De la même manière que dans le cas d'une turbomachine propulsive entraînant le rotor propulsif d'un aéronef, la régulation d'une turbomachine non propulsive de génération d'énergie doit donc asservir le régime de basse pression N2, et limiter ses fluctuations vis-à-vis des variations de puissance électrique consommée par le système propulsif électrique de l'aéronef.

De préférence, le module de répartition d'énergie est configuré pour alimenter chaque bus d'alimentation par la turbomachine et par une batterie. De manière préférée, chaque bus d'alimentation est alimenté exclusivement par la batterie et la turbomachine. Le taux d'alimentation varie en fonction de différents paramètres, par exemple, de l'état de charge de la batterie.

De manière préférée, le besoin en puissance d'un rotor propulsif est déterminé en fonction d'au moins un des paramètres suivants dudit rotor propulsif : la poussée, le régime et le pas dudit rotor propulsif. Autrement dit, le paramètre d'anticipation permet de prendre en compte la nature diverse des rotors propulsifs ainsi que leur commande qui peut être diverse (variation du pas collectif, du régime, etc.). De préférence, le besoin en puissance d'un rotor propulsif est déterminé en fonction de plusieurs, de préférence tous, des paramètres cités.

Selon un aspect de l'invention, au moins deux rotors propulsifs sont reliés électriquement au module de répartition d'énergie par un même bus d'alimentation. Ainsi, cela permet de mutualiser les bus d'alimentation. De préférence, au moins deux bus d'alimentation sont reliés électriquement à un même rotor propulsif afin de réaliser une alimentation redondante et ainsi améliorer la sécurité.

De préférence, le bus d'alimentation alimentant au moins deux rotors propulsifs en fonction de taux de mutualisation prédéterminés, le procédé comprend une étape de détermination du besoin en puissance élémentaire dudit bus d'alimentation en fonction du besoin en puissance de chaque rotor propulsif relié audit bus d'alimentation, des taux de mutualisation prédéterminés et du taux d'alimentation dudit bus d'alimentation.

De manière préférée, le paramètre d'anticipation est déterminé à partir d'une base de données recevant en entrée le besoin en puissance globale. Ainsi, le besoin en puissance globale est directement associé à un paramètre d'anticipation à la manière du pas collectif selon l'art antérieur. La détermination est directe et rapide.

L'invention concerne également un système de régulation d'une turbomachine de génération électrique non propulsive configurée pour alimenter électriquement une pluralité de rotors propulsifs d'un aéronef, chaque rotor propulsif étant relié à un module de répartition d'énergie par au moins un bus d'alimentation, la turbomachine alimentant chaque bus d'alimentation via le module de répartition d'énergie selon un taux d'alimentation, la turbomachine comportant un arbre haute pression, ayant un régime haute pression N1, et un arbre basse pression, ayant un régime basse pression N2, le système de régulation comportant :

- un module de détermination de puissance configuré pour déterminer le besoin en puissance de chaque rotor propulsif,

- un module d'anticipation configuré pour déterminer :

  • un besoin en puissance de chaque bus d'alimentation en fonction du besoin en puissance de chaque rotor propulsif,

  • un besoin en puissance élémentaire de chaque bus d'alimentation en fonction du taux d'alimentation et du besoin en puissance de chaque bus d'alimentation

  • un besoin en puissance globale à partir de l'ensemble des besoins en puissance élémentaire des bus d'alimentation,

  • un paramètre d'anticipation à partir du besoin en puissance globale,

- un module de régulation configuré pour déterminer

  • une consigne de régime haute pression à partir d'une consigne de régime basse pression et d'une mesure du régime basse pression de la turbomachine et dudit paramètre d'anticipation et

  • une consigne de débit de carburant de la turbomachine à partir de la consigne de régime haute pression et d'une mesure du régime haute pression.

L'invention concerne également une turbomachine de génération électrique non propulsive configurée pour alimenter électroniquement une pluralité de rotors propulsifs d'un aéronef, la turbomachine comportant un arbre haute pression, ayant un régime haute pression N1, et un arbre basse pression, ayant un régime basse pression N2, la turbomachine comprenant un système de régulation tel que présenté précédemment.

L'invention concerne en outre un aéronef comportant une pluralité de rotors propulsifs, au moins un module de répartition d'énergie, au moins un bus d'alimentation reliant chaque rotor propulsif au module de répartition d'énergie, une turbomachine, telle que présentée précédemment, alimentant chaque bus d'alimentation via le module de répartition d'énergie selon un taux d'alimentation.

## PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :

La figure 1 est une représentation schématique d'un système de régulation d'une turbomachine propulsive selon l'art antérieur ;

La figure 2 est une représentation schématique d'un système de régulation d'une turbomachine non propulsive de génération électrique pour alimenter une pluralité de rotors propulsifs selon l'invention ;

La figure 3 est une représentation schématique d'un module d'anticipation d'un système de régulation ; et

La figure 4 est une représentation schématique d'un module d'anticipation pour plusieurs rotors propulsifs mutualisés sur un même bus d'alimentation.

Il faut noter que les figures exposent l'invention de manière détaillée pour mettre en œuvre l'invention, lesdites figures pouvant bien entendu servir à mieux définir l'invention le cas échéant.

## DESCRIPTION DETAILLEE DE L'INVENTION

En référence à la figure 2, il est représenté de manière schématique une architecture multi-rotors d'un aéronef, en particulier, un hélicoptère. Dans cet exemple, l'aéronef comporte une pluralité de rotors propulsifs R1-R4 alimentés électriquement par un module de répartition 30 lui-même alimenté par une turbomachine non propulsive de génération électrique T et une batterie électrique 31. Par batterie électrique 31, on entend aussi bien une unique batterie électrique 31 qu'un ensemble de plusieurs batteries 31. Dans cet exemple, il est représenté 4 rotors propulsifs R1-R4 mais il va de soi que leur nombre pourrait être différent. L'aéronef comporte un système de commande de vol pour contrôler les rotors propulsifs R1-R4.

Chaque rotor propulsif R1-R4 est relié au module de répartition d'énergie 30 par un ou plusieurs bus d'alimentation B1-B4. Dans la première forme de réalisation de la figure 2, chaque rotor propulsif R1-R4 est relié au module de répartition d'énergie 30 par un unique bus d'alimentation B1-B4.

Le module de répartition 30 est alimenté par une pluralité de génératrices électriques GE entrainées par la turbomachine T. Chaque bus d'alimentation B1-B4 est alimenté par la turbomachine en fonction d'un taux d'alimentation $\delta1$-$\delta4$. Autrement dit, pour le premier bus d'alimentation B1, le taux d'alimentation $\delta1$ correspond à la part de la turbomachine T dans l'alimentation électrique du premier bus d'alimentation B1. De manière réciproque, le taux d'alimentation $1-\delta1$ correspond à la part de la batterie 31 dans l'alimentation électrique du premier bus d'alimentation B1. Pour chaque bus d'alimentation B1-B4, le taux d'alimentation $\delta1$-$\delta4$ peut varier au cours du temps et des conditions de fonctionnement. A titre d'exemple, lorsque le taux d'alimentation $\delta1$ est égal à 0, seule la batterie 31 alimente le premier bus d'alimentation B1. A l'inverse, lorsque le taux d'alimentation $\delta1$ est égal à 1, seule la turbomachine T alimente le premier bus d'alimentation B1. De plus, la turbomachine T peut alimenter seule le premier bus d'alimentation B1 mais également recharger la batterie 31. Autrement dit, la turbomachine T peut générer plus d'énergie que celle demandée par les bus d'alimentation B1-B4 afin de recharger la batterie 31.

Toujours en référence à la figure 2, il est représenté un système de régulation de la turbomachine non propulsive de génération électrique T selon une forme de réalisation de l'invention. De manière connue, la turbomachine T comporte un arbre haute pression ayant un régime de haute pression N1 et un arbre basse pression ayant un régime de basse pression N2.

De manière connue, la turbomachine comporte un compresseur qui est entrainé par l'arbre haute pression. L'arbre basse pression entraine la pluralité de génératrices électriques GE afin d'alimenter le module de répartition 30.

De manière analogue à l'art antérieur, le système de régulation de la turbomachine T comporte un module de régulation 60 reposant sur deux boucles de régulation imbriquées : une boucle de régulation du régime basse pression N2 et une boucle de régulation du régime haute pression N1.

Le module de régulation 60 reçoit en entrée une consigne de régime N2c qui est comparée au régime basse pression N2 de la turbomachine T afin de déterminer un écart de régime basse pression $\epsilon$N2. Un régime haute pression préliminaire N1pc est déterminé par un correcteur basse pression CN2, du type proportionnel intégral, à partir de l'écart de régime basse pression $\epsilon$N2. Un régime de consigne haute pression N1c est déterminé en additionnant le paramètre haute pression préliminaire N1pc à un paramètre d'anticipation N1ap. Puis, le régime de consigne haute pression N1c est comparé au régime haute pression N1 de la turbomachine afin de déterminer un écart de régime haute pression $\epsilon$N1. Une quantité de carburant Qc est déterminée par un correcteur haute pression CN1, du type proportionnel intégral, à partir de l'écart de régime haute pression $\epsilon$N1. De manière avantageuse, le paramètre d'anticipation N1ap est déterminé de manière à ce que la turbomachine T reçoive une quantité de carburant optimale Qc pour limiter la variation de régime basse pression N2.

Selon l'invention, le paramètre d'anticipation N1ap est fonction du besoin en puissance globale Pglob qui est déterminé à partir des besoins en puissance élémentaire PB1e-PB4e des bus d'alimentation B1-B4. Par la suite, on entend par puissance élémentaire, la puissance prélevée sur la turbomachine T par chaque bus d'alimentation B1-B4 comme cela va être présenté par la suite.

Selon l'invention, le système de régulation comporte un module d'anticipation 40 configuré pour déterminer le paramètre d'anticipation N1ap à partir des besoins en puissance P1-P4 de chaque rotor propulsif R1-R4.

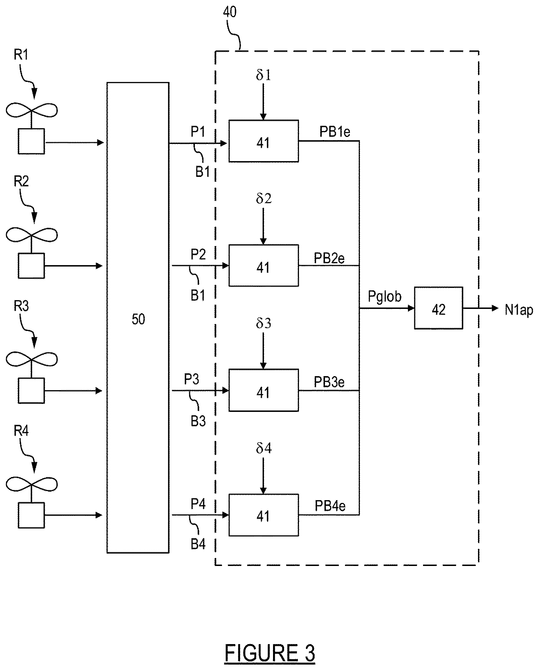

En référence à la figure 3, les besoins en puissance P1-P4 de chaque rotor propulsif R1-R4 sont déterminés par un module de détermination de puissance 50 à partir de différents paramètres propres à chaque rotor propulsif R1-R4, en particulier, le régime, le pas, les conditions atmosphériques, la vitesse de l'aéronef, etc. De manière préférée, le module de détermination de puissance 50 se présente sous la forme d'un calculateur électronique relié à des capteurs mesurant les paramètres propres de chaque rotor propulsif R1-R4.

Comme illustré à la figure 3, le module d'anticipation 40 comporte un premier sous-module 41 configuré pour déterminer un besoin en puissance élémentaire PB1e- PB4e de chaque bus d'alimentation PB1-PB4 à partir du taux d'alimentation $\delta1$- $\delta4$ dudit bus d'alimentation B1-B4 et du besoin en puissance P1-P4 dudit rotor propulsif R1-R4 selon la formule suivante :

$$PBe = P * \delta$$

Le besoin en puissance élémentaire PB1e-PB4e représente l'impact en besoin de puissance électrique de chaque rotor propulsif R1-R4. Dans cet exemple, le besoin en puissance élémentaire PB1e-PB4e d'un bus d'alimentation PB1-PB4 correspond au besoin en puissance P1-P4 du rotor propulsif R1-R4 auquel il est relié.

Le module d'anticipation 40 est configuré pour déterminer un besoin en puissance globale Pglob à partir de l'ensemble des besoins en puissance élémentaire PBe1-PBe4. Dans cet exemple, le besoin en puissance globale Pglob est obtenu par addition des puissances élémentaires PBe1-PBe4.

Toujours en référence à la figure 3, le module d'anticipation 40 comporte une base de données 42 configurée pour associer un besoin en puissance globale Pglob à un paramètre d'anticipation N1ap. De manière préférée, la base de données 42 est définie de manière empirique ou par calcul (modèle mathématique, fonction mathématique, etc.).

Le paramètre d'anticipation N1ap est introduit dans le module de régulation 60 en lieu et place du paramètre d'anticipation selon l'art antérieur qui était défini à partir du pas collectif du rotor de l'aéronef. De manière avantageuse, pour réguler la turbomachine T, le module de régulation 60 reste identique pour une architecture mono-rotor et une architecture multi-rotors, seul le paramètre d'anticipation N1ap est adapté. Ainsi, toute amélioration du système de régulation bénéficie à toutes les architectures.

La définition du paramètre d'anticipation N1ap est judicieuse étant donné qu'elle correspond au besoin en puissance demandé à la turbomachine non-propulsive T. De manière avantageuse, un tel paramètre est analogue au paramètre calculé à partir du pas collectif pour une turbomachine propulsive entraînant mécaniquement le rotor de l'aéronef.

Lors du vol de l'aéronef, le système de commande de vol de l'aéronef contrôle les différents rotors propulsifs R1-R4 afin de déplacer l'aéronef. Les rotors propulsifs R1-R4 sont alimentés par la turbomachine T et par la batterie 31 en fonction de leurs taux d'alimentation $\delta 1$-$\delta 4$ respectifs. Le module de détermination de puissance 50 permet de déterminer le besoin en puissance P1-P4. A partir de ces besoins en puissance P1-P4, le module d'anticipation 40 détermine le besoin en puissance globale Pglob qui impacte la turbomachine T et en déduit un paramètre d'anticipation N1ap qui est utilisé pour réguler le régime basse pression N2 et limiter les variations de ce dernier. La turbomachine T est utilisée de manière optimale, ce qui limite sa consommation de carburant.

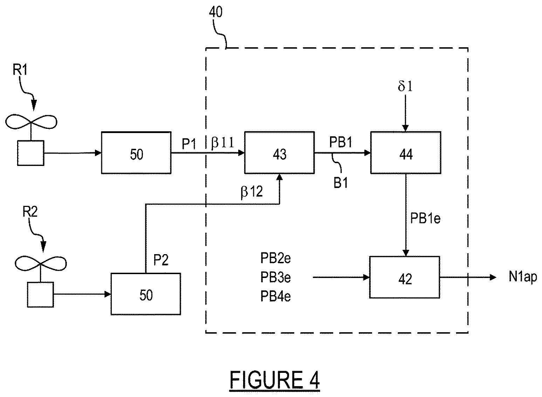

Dans une deuxième forme de réalisation, comme illustré à la figure 4, plusieurs rotors propulsif R1-R4 sont reliés au module de répartition 30 par un même bus d'alimentation B1-B4. De plus, un même rotor propulsif R1-R4 est relié électriquement à plusieurs bus d'alimentation B1-B4 de manière à permettre une redondance améliorant la fiabilité en cas de défaillance.

De manière analogue à précédemment, le module de détermination de puissance 50 détermine le besoin en puissance P1-P4 de chaque rotor propulsif R1-R4 à partir de différents paramètres propres à chaque rotor propulsif R1-R4, en particulier, le régime, le pas, les conditions atmosphériques, la vitesse de l'aéronef, etc.

Par la suite, il est présenté l'exemple d'un unique bus d'alimentation B1 qui est partagé avec deux rotor R1, R2. Il va de soi que le nombre que leur nombre pourrait être différent.

Dans cet exemple, le bus d'alimentation B1 alimente les rotors propulsifs R1, R2 en fonction de taux de mutualisation prédéterminés $\beta 11$, $\beta 12$. Dans cet exemple, en référence à la figure 4, le premier bus d'alimentation B1 fournit au premier rotor propulsif R1 une puissance $\beta 11*P1$ et au deuxième rotor propulsif R2 une puissance $\beta 12*P2$. Autrement dit, la puissance totale du bus d'alimentation PB1 est définie de la manière suivante :

$$PB1 = \beta 11 * P1 + \beta 12 * P2$$

De manière analogue à précédemment, chaque bus d'alimentation B1-B4 est alimenté directement par la turbomachine T en fonction d'un taux d'alimentation $\delta 1$-$\delta 4$ par entrainement des génératrices électriques GE. On détermine le besoin en puissance élémentaire PB1e-PB4e de chaque bus d'alimentation B1-B4 en fonction du taux d'alimentation $\delta 1$-$\delta 4$ et du besoin en puissance de bus PB1-PB4.

Dans cet exemple, en référence à la figure 4, le besoin en puissance élémentaire PB1e du premier bus d'alimentation PB1 est défini de la manière suivante :

$$PB1e = \delta 1 * (\beta 11 * P1 + \beta 12 * P2)$$

De manière analogue à précédemment, on déduit le besoin en puissance globale Pglob en additionnant les besoins en puissance élémentaire PB1e-PB4e afin de déterminer le paramètre d'anticipation N1ap.

Autrement dit, l'invention permet de déterminer un paramètre d'anticipation N1ap pertinent aussi bien lorsque les bus d'alimentation B1-B4 sont indépendants que lorsqu'ils sont mutualisés pour augmenter la redondance.

Grâce à l'invention, une turbomachine non propulsive T est régulée de manière optimale en utilisant en partie le système de régulation mis au point dans l'art antérieur pour une turbomachine propulsive.

## Revendications

1. Procédé de régulation d'une turbomachine de génération électrique non propulsive (T) configurée pour alimenter électriquement une pluralité de rotors propulsifs (R1-R4) d'un aéronef, chaque rotor propulsif (R1-R4) étant relié à un module de répartition d'énergie (30) par au moins un bus d'alimentation (B1-B4), la turbomachine (T) alimentant chaque bus d'alimentation (B1-B4) via le module de répartition d'énergie (30) selon un taux d'alimentation ($\delta1$- $\delta4$), la turbomachine (T) comportant un arbre haute pression un et ayant un régime haute pression N1, et un arbre basse pression, ayant un régime basse pression N2, le procédé de régulation comportant :

- une étape de détermination du besoin en puissance (P1-P4) de chaque rotor propulsif (R1-R4),
- une étape de détermination du besoin en puissance (PB1-PB4) de chaque bus d'alimentation (B1-B4) en fonction du besoin en puissance (P1-P4) de chaque rotor propulsif (R1-R4),
- une étape de détermination du besoin en puissance élémentaire (PB1e-PB4e) de chaque bus d'alimentation (B1-B4) en fonction du taux d'alimentation ($\delta1$-$\delta4$) et du besoin en puissance (PB1-PB4) de chaque bus d'alimentation (B1-B4),
- une étape de détermination du besoin en puissance globale (Pglob) à partir de l'ensemble des besoins en puissance élémentaire (PB1e-PB4e) des bus d'alimentation (B1-B4),
- une étape de détermination d'un paramètre d'anticipation (N1ap) à partir du besoin en puissance globale (Pglob),
- une étape de détermination d'une consigne de régime haute pression (N1c) à partir d'une consigne de régime basse pression (N2c) et d'une mesure du régime basse pression (N2) de la turbomachine (T) et dudit paramètre d'anticipation (N1ap) et
- une étape de détermination d'une consigne de débit de carburant (Qc) de la turbomachine (T) à partir de la consigne de régime haute pression (N1c) et d'une mesure du régime haute pression (N1).

2. Procédé de régulation selon la revendication 1, dans lequel le module de répartition d'énergie (30) est configuré pour alimenter chaque bus d'alimentation (B1-B4) par la turbomachine (T) et par une batterie (31).

3. Procédé de régulation selon l'une des revendications 1 à 2, dans lequel le besoin en puissance (P1-P4) d'un rotor propulsif (R1-R4) est déterminé en fonction d'au moins un des paramètres suivants dudit rotor propulsif (R1-R4) : la poussée, le régime et le pas dudit rotor propulsif (R1-R4).

4. Procédé de régulation selon l'une des revendications 1 à 3, dans lequel au moins deux rotors propulsifs (R1-R4) sont reliés électriquement au module de répartition d'énergie (30) par un même bus d'alimentation (B1-B4).

5. Procédé de régulation selon la revendication 4, dans lequel, le bus d'alimentation (B1-B4) alimentant au moins deux rotors propulsifs (R1-R4) en fonction de taux de mutualisation prédéterminés ($\beta11$, $\beta12$), le procédé comprend une étape de détermination du besoin en puissance élémentaire (PB1e-PB4e) dudit bus d'alimentation (B1-B4) en fonction du besoin en puissance (P1-P4) de chaque rotor propulsif (R1-R4) relié audit bus d'alimentation (B1-B4), des taux de mutualisation prédéterminés ($\beta11$, $\beta12$) et du taux d'alimentation ($\delta1$- $\delta4$) dudit bus d'alimentation (B1-B4).

6. Procédé de régulation selon l'une des revendications 1 à 5, dans lequel le paramètre d'anticipation (N1ap) est déterminé à partir d'une base de données (40) recevant en entrée le besoin en puissance globale (Pglob).

7. Système de régulation d'une turbomachine de génération électrique non propulsive (T) configurée pour alimenter électriquement une pluralité de rotors propulsifs (R1-R4) d'un aéronef, chaque rotor propulsif (R1-R4) étant relié à un module de répartition d'énergie (30) par au moins un bus d'alimentation (B1-B4), la turbomachine (T) alimentant chaque bus d'alimentation (B1-B4) via le module de répartition d'énergie (30) selon un taux d'alimentation ($\delta1$- $\delta4$), la turbomachine (T) comportant un arbre haute pression, ayant un régime haute pression N1, et un arbre basse pression, ayant un régime basse pression N2, le système de régulation comportant :

- un module de détermination de puissance (50) configuré pour déterminer le besoin en puissance (P1-P4) de chaque rotor propulsif (R1-R4),
- un module d'anticipation (40) configuré pour déterminer :

i. un besoin en puissance (PB1-PB4) de chaque bus d'alimentation (B1-B4) en fonction du besoin en puissance (P1-P4) de chaque rotor propulsif (R1-R4),
ii. un besoin en puissance élémentaire (PB1e-PB4e) de chaque bus d'alimentation (B1-B4) en fonction du taux d'alimentation ($\delta1$- $\delta4$) et du besoin en puissance (PB1-PB4) de chaque bus d'alimentation (B1-B4)
iii. un besoin en puissance globale (Pglob) à partir de l'ensemble des besoins en puissance élémentaire (PB1e-PB4e) des bus d'alimentation (B1-B4),

iv. un paramètre d'anticipation (N1ap) à partir du besoin en puissance globale (Pglob),

- un module de régulation (60) configuré pour déterminer

i. une consigne de régime haute pression (N1c) à partir d'une consigne de régime basse pression (N2c) et d'une mesure du régime basse pression (N2) de la turbomachine (T) et dudit paramètre d'anticipation (N1ap) et
ii. une consigne de débit de carburant (Qc) de la turbomachine (T) à partir de la consigne de régime haute pression (N1c) et d'une mesure du régime haute pression (N1).

8. Turbomachine de génération électrique non propulsive (T) configurée pour alimenter électroniquement une pluralité de rotors propulsifs (R1-R4) d'un aéronef, la turbomachine (T) comportant un arbre haute pression, ayant un régime haute pression N1, et un arbre basse pression, ayant un régime basse pression N2, la turbomachine (T) comprenant un système de régulation selon la revendication 7.

9. Aéronef comportant une pluralité de rotors propulsifs (R1-R4), au moins un module de répartition d'énergie (30), au moins un bus d'alimentation (B1-B4) reliant chaque rotor propulsif (R1-R4) au module de répartition d'énergie (30), une turbomachine (T) selon la revendication 8 alimentant chaque bus d'alimentation (B1-B4) via le module de répartition d'énergie (30) selon un taux d'alimentation ($\delta$1-$\delta$4).

## Patentansprüche

1. Verfahren zur Steuerung einer Nichtantriebsenergieerzeugungsturbomaschine (T), die ausgelegt ist, um eine Vielzahl von Antriebsrotoren (R1-R4) eines Fluggeräts elektrisch zu versorgen, wobei jeder Antriebsrotor (R1-R4) mit einem Energieverteilungsmodul (30) durch mindestens einen Versorgungsbus (B1-B4) verbunden ist, wobei die Turbomaschine (T) jeden Versorgungsbus (B1-B4) über das Energieverteilungsmodul (30) gemäß einem Versorgungsgrad ($\delta$1-$\delta$4) versorgt, wobei die Turbomaschine (T) eine Hochdruckwelle aufweist, die einen Hochdruckbetrieb N1 hat, und eine Niederdruckwelle, die einen Niederdruckbetrieb N2 hat, wobei das Steuerungsverfahren aufweist:

- einen Schritt des Bestimmens des Leistungsbedarfs (P1-P4) jedes Antriebsrotors (R1-R4),
- einen Schritt des Bestimmens des Leistungsbedarfs (PB1-PB4) jedes Versorgungsbusses (B1-B4) in Abhängigkeit vom Leistungsbedarf (P1-P4) jedes Antriebsrotors (R1-R4),
- einen Schritt des Bestimmens des elementaren Leistungsbedarfs (PB1e-PB4e) jedes Versorgungsbusses (B1-B4) in Abhängigkeit vom Versorgungsgrad ($\delta$1-$\delta$4) und vom Leistungsbedarf (PB1-PB4) jedes Versorgungsbusses (B1-B4),
- einen Schritt des Bestimmens des globalen Leistungsbedarfs (Pglob) ausgehend von der Gesamtheit der elementaren Leistungsbedarfe (PB1e-PB4e) der Versorgungsbusse (B1-B4),
- einen Schritt des Bestimmens eines Antizipationsparameters (N1ap) ausgehend vom globalen Leistungsbedarf (Pglob),
- einen Schritt des Bestimmens eines Hochdruckbetriebssollwerts (N1c) ausgehend von einem Niederdruckbetriebssollwert (N2c) und einer Messung des Niederdruckbetriebs (N2) der Turbomaschine (T) und des Antizipationsparameters (N1ap) und
- einen Schritt des Bestimmens eines Kraftstoffdurchsatzsollwerts (Qc) der Turbomaschine (T) ausgehend vom Hochdruckbetriebssollwert (N1c) und einer Messung des Hochdruckbetriebs (N1).

2. Steuerungsverfahren nach Anspruch 1, wobei das Energieverteilungsmodul (30) ausgelegt ist, um jeden Versorgungsbus (B1-B4) durch die Turbomaschine (T) und durch eine Batterie (31) zu versorgen.

3. Steuerungsverfahren nach einem der Ansprüche 1 bis 2, wobei der Leistungsbedarf (P1-P4) eines Antriebsrotors (R1-R4) in Abhängigkeit von mindestens einem der folgenden Parameter des Antriebsrotors (R1-R4) Schub, Betrieb und Einstellwinkel des Antriebsrotors (R1-R4) bestimmt wird.

4. Steuerungsverfahren nach einem der Ansprüche 1 bis 3, wobei mindestens zwei Antriebsrotoren (R1-R4) mit dem Energieverteilungsmodul (30) durch denselben Versorgungsbus (B1-B4) elektrisch verbunden sind.

5. Steuerungsverfahren nach Anspruch 4, wobei das Verfahren, wobei der Versorgungsbus (B1-B4) mindestens zwei Antriebsrotoren (R1-R4) in Abhängigkeit von vorher festgelegten Bündelungsraten ($\beta$11, $\beta$12) versorgt, einen Schritt des Bestimmens des elementaren Leistungsbedarfs (PB1e-PB4e) des Versorgungsbusses (B1-B4) in Abhängigkeit vom Leistungsbedarf (P1-P4) jedes Antriebsrotors (R1-R4), der mit dem Versorgungsbus (B1-B4) verbunden ist, von den vorher festgelegten Bündelungsraten ($\beta$11, $\beta$12) und vom Versorgungsgrad ($\delta$1-$\delta$4) des Versorgungsbusses (B1-B4) umfasst.

**6.** Steuerungsverfahren nach einem der Ansprüche 1 bis 5, wobei der Antizipationsparameter (N1ap) ausgehend von einer Datenbank (40) bestimmt wird, die eingehend den globalen Leistungsbedarf (Pglob) empfängt.

**7.** System zur Steuerung einer Nichtantriebsenergieerzeugungsturbomaschine (T), die ausgelegt ist, um eine Vielzahl von Antriebsrotoren (R1-R4) eines Fluggeräts elektrisch zu versorgen, wobei jeder Antriebsrotor (R1-R4) mit einem Energieverteilungsmodul (30) durch mindestens einen Versorgungsbus (B1-B4) verbunden ist, wobei die Turbomaschine (T) jeden Versorgungsbus (B1-B4) über das Energieverteilungsmodul (30) gemäß einem Versorgungsgrad (δ1-δ4) versorgt, wobei die Turbomaschine (T) eine Hochdruckwelle aufweist, die einen Hochdruckbetrieb N1 hat, und eine Niederdruckwelle, die einen Niederdruckbetrieb N2 hat, wobei das Steuerungssystem aufweist:

- ein Modul zur Bestimmung der Leistung (50), das ausgelegt ist, um den Leistungsbedarf (P1-P4) jedes Antriebsrotors (R1-R4) zu bestimmen,
- ein Antizipationsmodul (40), das ausgelegt ist, um zu bestimmen:

i. einen Leistungsbedarf (PB1-PB4) jedes Versorgungsbusses (B1-B4) in Abhängigkeit vom Leistungsbedarf (P1-P4) jedes Antriebsrotors (R1-R4),
ii. einen elementaren Leistungsbedarf (PB1e-PB4e) jedes Versorgungsbusses (B1-B4) in Abhängigkeit vom Versorgungsgrad (δ1-δ4) und vom Leistungsbedarf (PB1-PB4) jedes Versorgungsbusses (B1-B4),
iii. einen globalen Leistungsbedarf (Pglob) ausgehend von der Gesamtheit der elementaren Leistungsbedarfe (PB1e-PB4e) des Versorgungsbusses (B1-B4),
iv. einen Antizipationsparameter (N1ap) ausgehend vom globalen Leistungsbedarf (Pglob),

- ein Steuerungsmodul (60), das ausgelegt ist, um zu bestimmen

i. einen Hochdruckbetriebssollwert (N1c) ausgehend von einem Niederdruckbetriebssollwert (N2c) und einer Messung des Niederdruckbetriebs (N2) der Turbomaschine (T) und des Antizipationsparameters (N1ap) und
ii. einen Kraftstoffdurchsatzsollwert (Qc) der Turbomaschine (T) ausgehend vom Hochdruckbetriebssollwert (N1c) und einer Messung des Hochdruckbetriebs (N1).

**8.** Nichtantriebsenergieerzeugungsturbomaschine (T), die ausgelegt ist, um eine Vielzahl von Antriebsrotoren (R1-R4) eines Fluggeräts elektronisch zu versorgen, wobei die Turbomaschine (T) eine Hochdruckwelle mit einem Hochdruckbetrieb N1 und eine Niederdruckwelle mit einem Niederdruckbetrieb N2 aufweist, wobei die Turbomaschine (T) ein Steuerungssystem nach Anspruch 7 umfasst.

**9.** Fluggerät, das eine Vielzahl von Antriebsrotoren (R1-R4), mindestens ein Energieverteilungsmodul (30), mindestens einen Versorgungsbus (B1-B4), der jeden Antriebsrotor (R1-R4) mit dem Energieverteilungsmodul (30) verbindet, eine Turbomaschine (T) nach Anspruch 8, die jeden Versorgungsbus (B1-B4) über das Energieverteilungsmodul (30) gemäß einem Versorgungsgrad (δ1-δ4) versorgt, aufweist.

**Claims**

**1.** Method for regulating a non-propulsion electrical generation turbomachine (T) configured to supply electrically a plurality of propulsion rotors (R1-R4) of an aircraft, each propulsion rotor (R1-R4) being connected to an energy distribution module (30) by at least one supply bus (B1-B4), the turbomachine (T) supplying each supply bus (B1-B4) via the energy distribution module (30) according to a supply rate (δ1- δ4), the turbomachine (T) comprising a high-pressure shaft, having a high-pressure rotation speed N1, and a low-pressure shaft, having a low-pressure rotation speed N2, the regulation method comprising:

- a step of determining the power requirement (P1-P4) of each propulsion rotor (R1-R4),
- a step of determining the power requirement (PB1-PB4) of each supply bus (B1-B4) as a function of the power requirement (P1-P4) of each propulsion rotor (R1-R4),
- a step of determining the elementary power requirement (PB1e-PB4e) of each supply bus (B1-B4) as a function of the supply rate (δ1- δ4) and the power requirement (PB1-PB4) of each supply bus (B1- B4),
- a step of determining the overall power requirement (Pglob) from all of the elementary power requirements (PB1e-PB4e) of the supply buses (B1-B4),
- a step of determining an anticipation parameter (N1ap) from the overall power requirement (Pglob),
- a step of determining a high-pressure rotation speed set point (N1c) from a low-pressure rotation speed set point (N2c) and from a measurement of the low-pressure rotation speed (N2) of the turbomachine (T) and of said anticipation parameter (N1ap) and

- a step of determining a fuel flow rate set point (Qc) of the turbomachine (T) from the high-pressure rotation speed set point (N1c) and from a measurement of the high-pressure rotation speed (N1).

2. Regulation method according to claim 1, wherein the energy distribution module (30) is configured to supply each supply bus (B1-B4) by the turbomachine (T) and by a battery (31).

3. Regulation method according to one of claims 1 to 2, wherein the power requirement (P1-P4) of a propulsion rotor (R1-R4) is determined as a function of at least one of the following parameters of said propulsion rotor (R1-R4): the thrust, the rotation speed and the pitch of said propulsion rotor (R1-R4).

4. Regulation method according to one of claims 1 to 3, wherein at least two propulsion rotors (R1-R4) are electrically connected to the energy distribution module (30) by a same supply bus (B1-B4).

5. Regulation method according to claim 4, wherein, the supply bus (B1- B4) supplying at least two propulsion rotors (R1-R4) as a function of predetermined sharing rates ($\beta$11, $\beta$12), the method comprises a step of determining the elementary power requirement (PB1e-PB4e) of said supply bus (B1-B4) as a function of the power requirement (P1-P4) of each propulsion rotor (R1-R4) connected to said supply bus (B1-B4), the predetermined sharing rates ($\beta$11, $\beta$12) and the supply rate ($\delta$1- $\delta$4) of said supply bus (B1-B4).

6. Regulation method according to one of claims 1 to 5, wherein the anticipation parameter (N1ap) is determined from a database (40) receiving in input the overall power requirement (Pglob).

7. System for regulating a non-propulsion electrical generation turbomachine (T) configured to supply electrically a plurality of propulsion rotors (R1-R4) of an aircraft, each propulsion rotor (R1-R4) being connected to an energy distribution module (30) by at least one supply bus (B1-B4), the turbomachine (T) supplying each supply bus (B1-B4) via the energy distribution module (30) according to a supply rate ($\delta$1- $\delta$4), the turbomachine (T) comprising a high-pressure shaft, having a high-pressure rotation speed N1, and a low-pressure shaft, having a low-pressure rotation speed N2, the regulation system comprising:

- a power determination module (50) configured to determine the power requirement (P1-P4) of each propulsion rotor (R1-R4),

- an anticipation module (40) configured to determine:

    i. a power requirement (PB1-PB4) of each supply bus (B1-B4) as a function of the power requirement (P1-P4) of each propulsion rotor (R1-R4),
    ii. an elementary power requirement (PB1e-PB4e) of each supply bus (B1-B4) as a function of the supply rate ($\delta$1- $\delta$4) and the power requirement (PB1-PB4) of each supply bus (B1-B4)
    iii. an overall power requirement (Pglob) from all of the elementary power supply requirements (PB1e-PB4e) of the supply buses (B1-B4),
    iv. an anticipation parameter (N1ap) from the overall power requirement (Pglob),

- a regulation module (60) configured to determine:

    i. a high-pressure rotation speed set point (N1c) from a low-pressure rotation speed set point (N2c) and from a measurement of the low-pressure rotation speed (N2) of the turbomachine (T) and of said anticipation parameter (N1ap) and
    ii. a fuel flow rate set point (Qc) of the turbomachine (T) from the high-pressure rotation speed set point (N1c) and from a measurement of the high-pressure rotation speed (N1).

8. Non-propulsion electrical generation turbomachine (T) configured to supply electrically a plurality of propulsion rotors (R1-R4) of an aircraft, the turbomachine (T) comprising a high-pressure shaft, having a high-pressure rotation speed N1, and a low-pressure shaft, having a low-pressure rotation speed N2, the turbomachine (T) comprising a regulation system according to claim 7.

9. Aircraft comprising a plurality of propulsion rotors (R1-R4), at least one energy distribution module (30), at least one supply bus (B1-B4) connecting each propulsion rotor (R1-R4) to the energy distribution module (30), a turbomachine (T) according to claim 8 supplying each supply bus (B1-B4) via the energy distribution module (30) according to a supply rate ($\delta$1- $\delta$4).

**FIGURE 1**

**FIGURE 2**

FIGURE 3

FIGURE 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 10233768 B1